# EUROPÄISCHE PATENTSCHRIFT

(11) **EP 2 683 919 B1**
(45) Veröffentlichungstag und Bekanntmachung des Hinweises auf die Patenterteilung: **14.10.2015**
(21) Anmeldenummer: 11799711.4
(22) Anmeldetag: 21.12.2011
(51) Int. Cl.: F01K 23/06, F01K 13/02, H02K 7/18, F01K 25/10

(54) **ABWÄRMENUTZUNGSANLAGE**
WASTE HEAT RECOVERY INSTALLATION
INSTALLATION À RÉCUPÉRATION DE CHALEUR PERDUE

(30) Priorität: 24.12.2010 DE 102010056297
(43) Veröffentlichungstag der Anmeldung: 15.01.2014
(73) Patentinhaber: Robert Bosch GmbH, 70442 Stuttgart (DE)
(72) Erfinder: MÜLLER, Stefan, 35043 Marburg (DE); HERRMANN, Konrad, 35440 Linden (DE); TEMELCI-ANDON, Anayet, 35457 Lollar (DE); KÖHLER, Harald, 35463 Fernwald (DE)
(86) Internationale Anmeldenummer: PCT/EP2011/073620
(87) Internationale Veröffentlichungsnummer: WO 2012/085104

(56) Entgegenhaltungen:
- US-A1- 2008 252 077
- US-A1- 2009 277 400

## Beschreibung

Die Erfindung betrifft eine Abwärmenutzungsanlage nach dem Oberbegriff des Patentanspruches 1.

Bei einem ORC (Organic-Rankine-Cycle) handelt es sich um einen thermodynamischen Kreisprozess nach Rankine. Dies bedeutet, dass ein Arbeitsmedium verschiedene thermodynamische Zustände durchläuft, um am Ende wieder in den flüssigen Ausgangszustand überführt zu werden. Dabei wird das Arbeitsmedium mit einer Pumpe auf ein höheres Druckniveau gebracht. Danach wird das Arbeitsmedium auf die Verdampfungstemperatur vorgewärmt und anschließend verdampft.

Es handelt sich somit um einen Dampfprozess, bei dem an Stelle von Wasser ein organisches Medium verdampft wird. Der entstandene Dampf treibt eine Expansionsmaschine an, beispielsweise eine Turbine, einen Kolben- oder Schraubenmotor, welcher wiederum mit einem elektrischen Generator gekoppelt ist, um Strom zu erzeugen. Nach der Arbeitsmaschine gelangt das Prozessmedium in einen Verflüssiger und wird dort unter Wärmeabgabe zurückgekühlt. Da Wasser unter atmosphärischen Bedingungen bei 100 °C verdampft, kann Wärme auf einem niedrigen Temperaturniveau, wie zum Beispiel Industrieabwärme oder Erdwärme, oftmals nicht zur Stromerzeugung genutzt werden. Verwendet man allerdings organische Medien mit niedrigeren Siedetemperaturen, so lässt sich Niedertemperaturdampf erzeugen.

Vorteilhaft in der Anwendung sind ORC-Anlagen beispielsweise auch bei der Verwertung von Biomasse im Zusammenhang mit Kraft-Wärme-Kopplung, insbesondere bei relativ kleinen Leistungen, also wenn die herkömmliche Biomasse-Feuerungstechnik relativ teuer erscheint. Biomasseanlagen besitzen häufig einen Fermenter zur Biogaserzeugung, welcher in der Regel beheizt werden muss.

Gattungsgemäße Abwärmenutzungsanlagen sind aus dem Bereich der Kraft-Wärme-Kopplung bekannt und bestehen aus einem mit einem nachgeschalteten ORC kombinierten BHKW, also einem Blockheizkraftwerk. Aus der DE 195 41 521 A1 geht eine Anlage zur Steigerung des elektrischen Wirkungsgrades bei der Verstromung von Sondergasen mittels Verbrennungsmotoren hervor, bei der die Abwärme des Motors in einer nachgeschalteten Energieumwandlungsanlage zur weiteren Stromerzeugung genutzt wird. Allerdings ist dabei nur die Hochtemperaturwärme aus dem Kühlwasserkreislauf sowie aus dem Abgaswärmetauscher des Motors zur Verwertung vorgesehen.

Weiterhin ist aus der US 4 901 531 ein in einen Rankine-Prozess integriertes Diesel-Aggregat bekannt, wobei ein Zylinder der Expansion gemäß Rankine dient und die anderen als Dieselmotor arbeiten. Aus der US 4 334 409 geht eine nach dem Rankine-Prozess arbeitende Anordnung hervor, bei der das Arbeitsfluid mit einem Wärmetauscher vorgeheizt wird, über den die Luft aus dem Auslass eines Kompressors einer Maschine mit innerer Verbrennung geführt ist.

Blockheizkraftwerke (BHKW) als Anlagen zur Kraft-Wärme-Kopplung sind allgemein bekannt. Es handelt sich dabei um dezentrale, meistens mit Verbrennungskraftmaschinen angetriebene Stromerzeugungsanlagen mit gleichzeitiger Abwärmenutzung. Die bei der Verbrennung über die Kühlmedien ausgetragene Wärme wird dabei möglichst vollständig zur Beheizung geeigneter Objekte genutzt.

Insbesondere bei Kraft-Wärme-Kopplungsanlagen mit nachgeschaltetem ORC als Abwärmekraftwerk haben sich Maschinen durchgesetzt, die auf Motoren mit einem Abgasturbolader zur Aufladung basieren. Man kommt damit der Forderung nach Maschinen mit sehr hohen elektrischen Wirkungsgraden nach, die sich nur mit Turboaufladung und Rückkühlung des durch die Verdichtung erhitzten Brenngasgemisches erreichen lassen. Generell ist eine Kühlung des Brenngasgemisches erforderlich, weil ansonsten die Füllung der Zylinder relativ schlecht wäre. Mit der Kühlung wird die Dichte des angesaugten Gemisches größer und es verbessert sich der Füllungsgrad. Damit steigen die Leistungsausbeute und der mechanische Wirkungsgrad des Motors.

Die Motorenhersteller schreiben für die Gemischkühlung eine Kühlwassereintrittstemperatur von nur etwa 40 bis 50 °C vor, damit das Gemisch genügend abgekühlt werden kann. Da dieses Temperaturniveau relativ niedrig ist, wird die dem Brenngasgemisch entzogene Wärme bei den bisher bekannten Kraft-Wärme-Kopplungsanlagen an die Umgebung abgegeben, beispielsweise mit einem Tischkühler.

Eine Anlage zur Nutzung der Abwärme zur Energieerzeugung ist aus der US 2007 02 40 420 A1 bekannt. Dabei wird mittels eines ORC die Abwärme genutzt um ein Fluid zu erhitzen und somit zu verdampfen. Dieses verdampfte Arbeitsmedium wird dann dazu verwendet, um eine Welle anzutreiben und damit mechanische oder über einen elektrischen Generator elektrische Energie zu erzeugen.

Auch die US 2009 02 77 400 A1 beschreibt eine Apparatur zur Gewinnung von Energie durch Abwärme. Hierbei kommt ein Generator zum Einsatz, der über eine Turbine oder einen elektrischen Generator eine gemeinsame Welle antreibt. Dabei wird elektrische Energie in Form von Gleichstrom von der Drehwelle erzeugt. Diese kann dann ins Stromnetz eingespeist oder für andere Anwendungen verwendet werden. Die US 2008 02 52 077 A1 beschreibt auch eine ähnliche Apparatur zur Gewinnung von Energie durch Abwärme.

Bekannt ist weiterhin aus der DE 10 2005 048 795 B3 die Vorwärmung des Arbeitsmediums im ORC in zwei Schritten in einer Beheizungsvorrichtung, nämlich dass das Prozessmedium im ORC über zwei in Reihe einer Speisepumpe nachgeschaltete Wärmetauscher erwärmt wird, wobei der erste Wärmetauscher nach der Speisepumpe als erste Stufe zur Einkopplung von Niedertemperaturwärme und der nachfolgende Wärmetauscher als zweite Stufe zur Einkopplung von Hochtemperaturwärme vorgesehen ist. Dabei ist die Gemischkühlung der Verbrennungskraftmaschine über einen Kreislauf mit dem ersten Wärmetauscher nach der Speisepumpe verbunden, wobei die Wärme aus der Kühlung des von der Verbrennungskraftmaschine angesaugten Brenngasgemisches zur Vorwärmung des Prozessmediums im ORC dient und als Niedertemperaturwärme im ersten Wärmetauscher eingekoppelt wird. Ein zweiter Heizkreislauf bezieht Wärme aus Motorkühlwasser und Abgas der Verbrennungskraftmaschine und ist mit dem zweiten Wärmetauscher nach der Speisepumpe verbunden, wobei die Wärme aus dem Kühlkreislauf und dem Abgas zur Überhitzung und Verdampfung des Prozessmediums im ORC dient und als Hochtemperaturwärme im zweiten Wärmetauscher nach der Speisepumpe eingekoppelt wird.

Der Erfindung liegt daher die Aufgabe zu Grunde, eine aus einem einer Abwärmequelle nachgeschalteten ORC bestehende Abwärmenutzungsanlage im Hinblick auf Aufbau und sicheres Betriebsverhalten zu optimieren.

Erfindungsgemäß wird dies mit den Merkmalen des Patentanspruches 1 gelöst. Vorteilhafte Weiterbildungen sind den Unteransprüchen zu entnehmen.

Die Abwärmenutzungsanlage ist dadurch gekennzeichnet, dass bei Stromnetz-Ausfall die vom auslaufenden Generator weiterhin erzeugte elektrische Energie zur Versorgung der magnetischen Lagerung mit der zugeordneten Regeleinrichtung eingesetzt wird. Damit wird ein sicherer Betrieb der Expansionsmaschine erreicht, weil bei Netzausfall die Lagerregelung weiterhin ihre Funktion erfüllt, indem ausreichend elektrische Energie aus dem Schwungmoment der Expansionsmaschine generiert wird. Erst bei Stillstand des Aggregates senken sich die magnetischen Lager, genauer die Welle der Expansionsmaschine in der zugeordneten Aufnahme, ab.

Erfindungsgemäß wird daher bei Stromnetz-Ausfall die vom auslaufenden Generator weiterhin erzeugte elektrische Energie, die nicht ins Stromnetz eingespeist werden kann und nicht zur Versorgung der magnetischen Lagerung mit zugeordneter Regeleinrichtung benötigt wird, im Gleichstrom-Zwischenkreis des zugeordneten Generator-Frequenzumrichters gespeichert. Die elektrische Energie fällt so lange an, wie sich der Generator dreht.

Vorteilhafterweise erfolgt dies, indem kurzzeitig, bei Netzausfall, die Spannung im Gleichstrom-Zwischenkreis angehoben wird. Dabei wird die vom auslaufenden Generator weiterhin erzeugte elektrische Energie über den mit dem Generator gekoppelten Frequenzumrichter zur Netzeinspeisung in den Gleichstrom-Zwischenkreis abgegeben.

In einer weiteren bevorzugten Ausführungsform der Erfindung wird die vom auslaufenden Generator weiterhin erzeugte überschüssige elektrische Energie, die nicht ins Stromnetz eingespeist wird und nicht zur Versorgung der magnetischen Lagerung mit zugeordneter Regeleinrichtung benötigt wird und auch'nicht im Gleichstrom-Zwischenkreis gespeichert werden kann, über mindestens einen elektrischen Bremswiderstand abgebaut. Überschüssige elektrische Energie wird dabei in Wärme umgewandelt.

Vorzugsweise ist erfindungsgemäß eine Spannungsüberwachungseinrichtung am Frequenzumrichter zur Netzeinspeisung für die Spannung im Gleichstrom-Zwischenkreis vorgesehen. Die Spannungsüberwachungseinrichtung vergleicht die aktuelle Spannung im Gleichstrom-Zwischenkreis mit einem vorgebbaren Maximalwert und schaltet beim Erreichen bzw. Überschreiten dieses Wertes mindestens einen elektrischen Bremswiderstand zu.

Mit der Erfindung werden Aufbau und Betriebsverhalten einer Abwärmenutzungsanlage, welche aus einem einer Abwärmequelle nachgeschalteten ORC besteht, optimiert. Abwärmequellen können beispielsweise Blockheizkraftwerke, Industrieanlagen oder Kesselanlagen sein. Die Expansionsmaschine wird mit den erfindungsgemäßen Maßnahmen gegen Netzausfall abgesichert bzw. in dieser Betriebssituation in einem sicheren Betriebszustand gehalten.

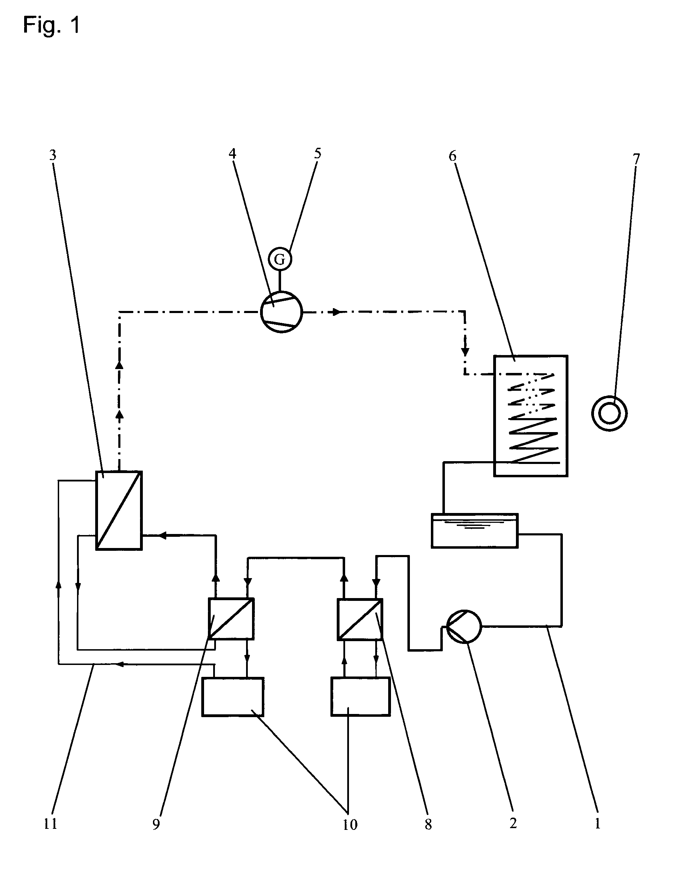

Die Zeichnung stellt ein Ausführungsbeispiel der Erfindung dar und zeigt in einer einzigen Figur den schematischen Aufbau einer Abwärmenutzungsanlage, bestehend aus einem dieser nachgeschalteten ORC.

Die für den ORC betriebswichtigen Komponenten sind ein ORC-Kreislauf 1, eine Speisepumpe 2, ein Verdampfer 3, eine Expansionsmaschine 4 zur Dampfexpansion, welche mit einem Generator 5 gekoppelt ist, ein Verflüssiger 6 für die Rückkühlung über eine Wärmesenke 7 sowie die Wärmetauscher 8, 9 zur Vorwärmung des Arbeitsmediums im ORC-Kreislauf 1.

Die beiden Wärmetauscher 8, 9 sind in Reihe der Speisepumpe 2 nachgeschaltet. Dabei dient der erste Wärmetauscher 8 nach der Speisepumpe 2 als erste Stufe zur Einkopplung von Niedertemperaturwärme und der nachfolgende Wärmetauscher 9 als zweite Stufe zur Einkopplung von Hochtemperaturwärme aus einer Abwärmequelle 10.

Ein zweiter Heizkreislauf 11 ist mit seinem Vorlaufbereich mit dem Verdampfer 3 des ORC verbunden, weil das Temperaturniveau zunächst ausreichend hoch für dessen direkte Beheizung ist. Danach mündet der zweite Heizkreislauf 11 rücklaufseitig in den zweiten Wärmetauscher 9 und gibt dort noch vorhandene Restwärme an den ORC ab.

Bei Stromnetz-Ausfall wird die vom auslaufenden Generator 5 weiterhin erzeugte elektrische Energie zur Versorgung der magnetischen Lagerung der Expansionsmaschine 4 mit einer zugeordneten, nicht dargestellten Regeleinrichtung eingesetzt, um einen sicheren Betrieb bei Netzausfall zu erreichen.

## Patentansprüche

1. Abwärmenutzungsanlage für eine Abwärmequelle (10), bestehend aus einem dieser nachgeschalteten ORC (Organic-Rankine-Cycle), wobei die Abwärmequelle (10) mit der Beheizungsvorrichtung des ORC in Verbindung steht, sowie mit einer mit einem Generator (5) gekoppelten Expansionsmaschine (4) zur Dampfexpansion im ORC, welche eine magnetische Lagerung mit einer zugeordneten Regeleinrichtung und einer Stromversorgung über einen Gleichstrom-Zwischenkreis eines Generator-Frequenzumrichters aufweist, **dadurch gekennzeichnet, dass** bei Stromnetz-Ausfall die vom auslaufenden Generator (5) weiterhin erzeugte elektrische Energie zur Versorgung der magnetischen Lagerung mit der zugeordneten Regeleinrichtung eingesetzt wird.

2. Abwärmenutzungsanlage nach Anspruch 1,
**dadurch gekennzeichnet, dass** bei Stromnetz-Ausfall die vom auslaufenden Generator (5) weiterhin erzeugte elektrische Energie, die nicht ins Stromnetz eingespeist werden kann und nicht zur Versorgung der magnetischen Lagerung mit zugeordneter Regeleinrichtung benötigt wird, im Gleichstrom-Zwischenkreis gespeichert wird.

3. Abwärmenutzungsanlage nach Anspruch 1 oder 2,
**dadurch gekennzeichnet, dass** bei Stromnetz-Ausfall die vom auslaufenden Generator (5) weiterhin erzeugte elektrische Energie, die nicht ins Stromnetz eingespeist werden kann und nicht zur Versorgung der magnetischen Lagerung mit zugeordneter Regeleinrichtung benötigt wird, im Gleichstrom-Zwischenkreis gespeichert wird, indem kurzzeitig die Spannung im Gleichstrom-Zwischenkreis angehoben wird.

4. Abwärmenutzungsanlage nach einem der Ansprüche 1 bis 3,
**dadurch gekennzeichnet, dass** bei Stromnetz-Ausfall die vom auslaufenden Generator (5) weiterhin erzeugte elektrische Energie über den mit dem Generator (5) gekoppelten Frequenzumrichter zur Netzeinspeisung in den Gleichstrom-Zwischenkreis abgegeben wird.

5. Abwärmenutzungsanlage nach einem der Ansprüche 1 bis 4,
**dadurch gekennzeichnet, dass** die vom auslaufenden Generator (5) weiterhin erzeugte überschüssige elektrische Energie, die nicht ins Stromnetz eingespeist wird und nicht zur Versorgung der magnetischen Lagerung mit zugeordneter Regeleinrichtung benötigt wird und auch nicht im Gleichstrom-Zwischenkreis gespeichert werden kann, über mindestens einen elektrischen Bremswiderstand abgebaut wird.

6. Abwärmenutzungsanlage nach einem der Ansprüche 1 bis 5,
**dadurch gekennzeichnet, dass** eine Spannungsüberwachungseinrichtung am Frequenzumrichter zur Netzeinspeisung für die Spannung im Gleichstrom-Zwischenkreis vorgesehen ist.

7. Abwärmenutzungsanlage nach Anspruch 6,
**dadurch gekennzeichnet, dass** die Spannungsüberwachungseinrichtung am Frequenzumrichter zur Netzeinspeisung die aktuelle Spannung im Gleichstrom-Zwischenkreis mit einem vorgebbaren Maximalwert vergleicht und beim Erreichen bzw. Überschreiten dieses Wertes mindestens einen elektrischen Bremswiderstand zuschaltet.

## Claims

1. Waste heat utilization system for a waste heat source (10), comprising an ORC (Organic Rankine Cycle) which is connected downstream of the said waste heat source, wherein the waste heat source (10) is connected to the heating apparatus of the ORC, and also having an expansion machine (4), which is coupled to a generator (5), for vapour expansion in the ORC, which expansion machine has a magnetic bearing having an associated control device and a power supply by means of a direct-current intermediate circuit of a generator frequency converter, **characterized in that**, in the event of a power supply system failure, the electrical energy which continues to be generated by the slowing-down generator (5) is used to supply the magnetic bearing having the associated control device.

2. Waste heat utilization system according to Claim 1, **characterized in that**, in the event of a power supply system failure, the electrical energy which continues to be generated by the slowing-down generator (5), cannot be fed into the power supply system and is not required to supply the magnetic bearing having the associated control device is stored in the direct-current intermediate circuit.

3. Waste heat utilization system according to Claim 1 or 2, **characterized in that**, in the event of a power supply system failure, the electrical energy which continues to be generated by the slowing-down generator (5), cannot be fed into the power supply system and is not required for supplying the magnetic bearing having the associated control device is stored in the direct-current intermediate circuit by the voltage in the direct-current intermediate circuit being briefly raised.

4. Waste heat utilization system according to one of Claims 1 to 3, **characterized in that**, in the event of a power supply system failure, the electrical energy which continues to be generated by the slowing-down generator (5) is output into the direct-current intermediate circuit by means of the frequency converter, which is coupled to the generator (5), for feeding the supply system.

5. Waste heat utilization system according to one of Claims 1 to 4, **characterized in that** the excess electrical energy which continues to be generated by the slowing-down generator (5), is not fed into the power supply system and is not required for supplying the magnetic bearing having the associated control device and also cannot be stored in the direct-current intermediate circuit is reduced by means of at least one electrical braking resistor.

6. Waste heat utilization system according to one of Claims 1 to 5, **characterized in that** a voltage monitoring device on the frequency converter for feeding the supply system is provided for the voltage in the direct-current intermediate circuit.

7. Waste heat utilization system according to Claim 6, **characterized in that** the voltage monitoring device on the frequency converter for feeding the supply system compares the actual voltage in the direct-current intermediate circuit with a prespecifiable maximum value and, when this value is reached or exceeded, connects at least one electrical braking resistor.

## Revendications

1. Installation d'exploitation de la chaleur perdue pour une source de chaleur perdue (10), composée d'un cycle de Rankine à fluide organique (ORC) monté en aval de celle-ci, la source de chaleur perdue (10) étant en liaison avec le dispositif de chauffage de l'ORC, et comprenant aussi une machine d'expansion (4) couplée avec un générateur (5) pour l'expansion de la vapeur dans l'ORC, laquelle possède un support magnétique avec un appareil de régulation associé et une alimentation électrique par le biais d'un circuit intermédiaire à courant continu d'un convertisseur de fréquence de générateur, **caractérisée en ce qu'**en cas de panne du réseau électrique, l'énergie électrique qui continue d'être générée par le générateur (5) en fin de fonctionnement est utilisée pour l'alimentation du support magnétique avec l'appareil de régulation associé.

2. Installation d'exploitation de la chaleur perdue selon la revendication 1, **caractérisée en ce qu'**en cas de panne du réseau électrique, l'énergie électrique qui continue d'être générée par le générateur (5) en fin de fonctionnement qui ne peut pas être injectée dans le réseau électrique et qui n'est pas requise pour l'alimentation du support magnétique avec l'appareil de régulation associé est stockée dans le circuit intermédiaire à courant continu.

3. Installation d'exploitation de la chaleur perdue selon la revendication 1 ou 2, **caractérisée en ce qu'**en cas de panne du réseau électrique, l'énergie électrique qui continue d'être générée par le générateur (5) en fin de fonctionnement qui ne peut pas être injectée dans le réseau électrique et qui n'est pas requise pour l'alimentation du support magnétique avec l'appareil de régulation associé est stockée dans le circuit intermédiaire à courant continu **en ce que** la tension dans le circuit intermédiaire à courant continu est brièvement rehaussée.

4. Installation d'exploitation de la chaleur perdue selon l'une des revendications 1 à 3, **caractérisée en ce qu'**en cas de panne du réseau électrique, l'énergie électrique qui continue d'être générée par le générateur (5) en fin de fonctionnement est délivrée dans le circuit intermédiaire à courant continu par le biais du convertisseur de fréquence d'injection dans le réseau qui est couplé au générateur (5).

5. Installation d'exploitation de la chaleur perdue selon l'une des revendications 1 à 4, **caractérisée en ce que** l'énergie électrique en excédent qui continue d'être générée par le générateur (5) en fin de fonctionnement qui n'est pas injectée dans le réseau électrique et qui n'est pas requise pour l'alimentation du support magnétique avec l'appareil de régulation associé et qui ne peut pas non plus être stockée dans le circuit intermédiaire à courant continu est résorbée par le biais d'au moins une résistance de freinage électrique.

6. Installation d'exploitation de la chaleur perdue selon l'une des revendications 1 à 5, **caractérisée en ce qu'**il existe un appareil de surveillance de la tension sur le convertisseur de fréquence d'injection dans le réseau pour la tension dans le circuit intermédiaire à courant continu.

7. Installation d'exploitation de la chaleur perdue selon la revendication 6, **caractérisée en ce que** l'appareil de surveillance de la tension sur le convertisseur de fréquence d'injection dans le réseau compare la tension actuelle dans le circuit intermédiaire à courant continu avec une valeur maximale pouvant être prédéfinie et met en circuit au moins une résistance de freinage électrique dans le cas où cette valeur est atteinte ou dépassée.
